# EUROPÄISCHE PATENTSCHRIFT

(11) **EP 2 945 854 B1**
(45) Veröffentlichungstag und Bekanntmachung des Hinweises auf die Patenterteilung: **21.02.2018**
(21) Anmeldenummer: 13811985.4
(22) Anmeldetag: 23.12.2013
(51) Int. Cl.: B63B 35/73, B63C 11/46, B60L 3/00, A63B 35/12

(54) **WASSERFAHRZEUG MIT FLUTUNGSRAUM**
WATERCRAFT WITH FLOODING CHAMBER
VÉHICULE MARIN PRÉSENTANT UN ESPACE DE MISE EN EAU

(30) Priorität: 18.01.2013 DE 102013100544
(43) Veröffentlichungstag der Anmeldung: 25.11.2015
(73) Patentinhaber: Cayago GmbH, 6370 Kitzbühel (AT)
(72) Erfinder: WALPURGIS, Hans, Peter, A-6352 Ellmau (AT)
(74) Vertreter: Herrmann, Jochen
(86) Internationale Anmeldenummer: PCT/EP2013/077896
(87) Internationale Veröffentlichungsnummer: WO 2014/111232

(56) Entgegenhaltungen:
- DE-A1- 3 523 758
- DE-A1-102004 049 615
- FR-A1- 2 915 172
- US-A- 4 341 177
- US-A- 5 158 034
- US-A1- 2001 025 594
- US-B1- 6 461 204

## Beschreibung

Die Erfindung betrifft ein Wasserfahrzeug mit einem Rumpf, der einen Strömungskanal aufweist oder dem ein Strömungskanal zugeordnet ist, wobei dem Strömungskanal eine motorbetriebene Wasser-Beschleunigungsanordnung, insbesondere ein Propeller zugeordnet ist.

Ein derartiges Wasserfahrzeug ist aus der DE 10 2004 049 615 A1 bekannt. Solche Wasserfahrzeuge werden insbesondere als Tauchschlitten eingesetzt. Sie weisen eine Griffanordnung auf, an der sich ein Benutzer festhalten kann, während er mit einem Teilbereich seines Oberkörpers oberseitig auf dem Rumpf des Wasserfahrzeuges aufliegt. Innerhalb des Rumpfes ist ein Strömungskanal angeordnet, in dem ein Propeller untergebracht ist. Der Propeller wird von einem Elektromotor angetrieben der über einen Akkumulator mit Strom versorgt. Während des Betriebseinsatzes erzeugen der Akkumulator und auch der Motor Abwärme, die in die Umgebung abgetauscht werden muss um einen zuverlässigen Dauerbetrieb aufrechterhalten zu können. Zu diesem Zweck sind die Akkumulatoren in ein Aluminiumgehäuse eingesetzt, wobei die Akkumulatoren mit dem Aluminiumgehäuse in wärmeleitendem Kontakt stehen. Der Rumpf weist eine unterseitige Aufnahme auf, in die das Aluminiumgehäuse eingesetzt und hierin verriegelt werden kann. Auf diese Weise steht das Aluminiumgehäuse unterseitig mit dem strömenden Wasser in Verbindung und es kann hier ein Wärmeabtausch erfolgen.

Der Elektromotor ist zum Zwecke der Kühlung innerhalb des Strömungskanals angeordnet. Das durch den Strömungskanal geführte Wasser wird um ein Gehäuse des Elektromotors geleitet, wodurch eine effektive Motorkühlung möglich wird. Der Elektromotor schränkt den freien Strömungsquerschnitt im Strömungskanal ein. Der Strömungskanal muss daher ausreichend groß dimensioniert werden um die Abschattung, die durch den Elektromotor bewirkt wird, zu kompensieren. Hierdurch wird die Baugröße des Wasserfahrzeuges beeinflusst.

Um mit den bekannten Wasserfahrzeugen sowohl einen Fahrbetrieb unter Wasser als auch auf dem Wasser durchführen zu können, ist eine genaue Gewichtstarierung erforderlich. Dementsprechend sollte das Wasserfahrzeug so viel Auftrieb entwickeln, dass es ausreichend schwimmfähig ist und mithin nicht untergehen kann. Der Auftrieb sollte allerdings nicht zu stark sein, sodass ein schneller Wechsel von der Überwasserfahrt auf die Tauchfahrt möglich ist. Aufgrund des Eigengewichts der elektrischen Einbauten muss das Wasserfahrzeug im Rumpf einen ausreichend großen Auftriebskörper aufweisen, der die Baugröße und damit die Fahrdynamik des Wasserfahrzeuges beeinflusst.

Es ist Aufgabe der Erfindung, ein Wasserfahrzeug der eingangs erwähnten Art bereitzustellen, das mit ausreichender Betriebssicherheit eine hohe Fahrdynamik bietet.

Diese Aufgabe wird dadurch gelöst, dass der Rumpf einen Flutungsraum aufweist, der über Wasserdurchtrittsöffnungen, insbesondere Wassereintritts- und Wasseraustrittsöffnungen mit der Umgebung in Verbindung steht.

Der Flutungsraum bietet mithin eine variable Massenkomponente mit der das Eigengewicht des Wasserfahrzeuges beeinflusst werden kann. Während des Betriebes füllt sich der Flutungsraum. Beim Abtauchen des Wasserfahrzeuges wird Luft aus dem Flutungsraum verdrängt und das Wasserfahrzeug kann schnell und einfach abtauchen. Wenn das Wasserfahrzeug nach dem Gebrauch aus dem Wasser gehoben wird, so entleert sich die Flutungskammer und beeinflusst nicht das Transportgewicht des Wasserfahrzeuges.

Gemäß einer bevorzugten Erfindungsvariante kann es vorgesehen sein, dass in dem Flutungsraum wenigstens eine elektrische Baueinheit angeordnet ist. Der Flutungsraum wird mithin zusätzlich zur Kühlung der elektrischen Baueinheit verwendet. Die elektrische Baueinheit kann ihre Verlustwärme an das im Flutungsraum strömende Wasser abgeben. Ein effektiver Wärmetausch ist insbesondere deswegen möglich, da der Flutungsraum sowohl über Wassereintritts- als auch Wasseraustrittsöffnungen mit der Umgebung in Verbindung steht. Mithin ist also eine Strömung im Flutungsraum erzeugbar über die kontinuierlich kühles Wasser nachgeführt wird. Abhängig von der Fahrgeschwindigkeit des Wasserfahrzeuges kann dann auch die Strömungsgeschwindigkeit im Flutungsraum variieren. Dies hat den Vorteil, dass bei schneller Fahrt, bei der auch eine hohe Verlustwärme erzeugt wird, ein hohes Kühlvolumen zur Verfügung steht.

Als elektrische Baueinheit können beispielsweise die Steuerelektronik, der die Wasser-Beschleunigungsanordnung antreibende Elektromotor und/oder ein Energiespeieher im Flutungsraum angeordnet sein. Diese Baueinheiten erzeugen relativ hohe Verlustleistungen und eignen sich daher besonders zum Einsatz im Flutungsraum.

Für das Wasserfahrzeug ergibt sich dann eine einfache Bauweise wenn vorgesehen ist, dass der Rumpf ein Oberteil und ein Unterteil aufweist, zwischen denen der Flutungsraum gebildet ist, und dass das Ober- und/oder das Unterteil zumindest bereichsweise die Außenhülle des Rumpfes bilden.

Vorteilhafterweise kann vorgesehen sein, dass das Unterteil lösbar mit dem Oberteil verbunden ist. Dann kann zum Zwecke der einfachen Wartung der Flutungsraum zugänglich gemacht werden. Wenn beispielsweise Verschmutzungen in den Flutungsraum eingedrungen sind, lassen sich diese wieder einfach entfernen. Falls im Flutungsraum elektrische Baueinheiten angeordnet sind, können diese nach Abnahme des Unterteils einfach gewartet bzw. ausgetauscht werden.

Eine effektive Durchströmung des Flutungsraumes kann dadurch erreicht werden, dass der Rumpf zumindest eine Eintrittsöffnung im Bereich des Bugs und zumindest eine Austrittsöffnung im Bereich des Hecks bildet.

Eine bevorzugte Erfindungsvariante ist dergestalt, dass der Strömungskanal zumindest bereichsweise im Bereich des Flutungsraums angeordnet ist und den freien Querschnitt des Flutungsraums verjüngt, und dass im Bereich des verjüngten Querschnitts eine elektrische Baueinheit angeordnet ist. Durch die Querschnittsverjüngung kann die Strömungsgeschwindigkeit im Flutungsraum verändert werden. Dementsprechend erhöht sich die Strömungsgeschwindigkeit bereichsweise im verjüngten Querschnitt, sodass die Kühlleistung hierdurch beeinflusst werden kann.

Denkbar ist es auch, dass in dem Flutungsraum zwei Teilbereiche baulich gegeneinander abgegrenzt sind, wobei jedem Teilbereich eine Wassereintritts- und/oder Wasseraustrittsöffnung zugeordnet ist. Auch durch diese Maßnahme lässt sich gezielt der Volumenstrom in den einzelnen Teilbereichen und damit die Kühlleistung beeinflussen.

Eine besonders bevorzugte Erfindungsausgestaltung ist derart, dass der Strömungskanal zwei Teilbereiche im Flutungsraum gegeneinander zumindest bereichsweise abgrenzt und dass in jedem der Teilbereiche eine elektrische Baueinheit angeordnet ist. Dadurch, dass der Strömungskanal zur Bereichsabgrenzung herangezogen wird, lässt sich der Teileaufwand verringern.

Eine mögliche Erfindungsvariante ist dergestalt, dass die elektrische Baueinheit mittels einer Aufhängung befestigt ist, und dass die Aufhängung die elektrische Baueinheit beabstandet zu den Flutungsraum begrenzenden Wandelementen hält. Auf diese Weise kann eine großflächige Umströmung der elektrischen Baueinheit und damit einhergehend eine effektive Wärmeabfuhr erzielt werden.

Eine bevorzugte Ausgestaltung der Erfindung sieht vor, dass das Wasserfahrzeug bei geflutetem Flutungsraum einen Auftrieb von mindestens 4 Kilogramm aufweist. Hierdurch wird das Wasserfahrzeug auch bei Seegang ausreichend schwimmfähig gehalten. Besonders vorteilhaft ist es, wenn der Auftrieb des Wasserfahrzeuges mindestens 7 Kilogramm beträgt. Dann kann im Schadensfall eine ausreichende Auftriebskraft zur Verfügung gestellt werden, die sowohl das Wasserfahrzeug als auch den Benutzer schwimmfähig hält.

Die Erfindung wird im Folgenden anhand eines in den Zeichnungen dargestellten Ausführungsbeispiels näher erläutert. Es zeigen:
- Fig. 1: in perspektivischer Seitenansicht von hinten ein Wasserfahrzeug,
- Fig. 2: das Wasserfahrzeug gemäß Fig. 1 in perspektivischer Seitenansicht von unten und mit abgenommenem Unterteil,
- Fig. 3: einen Vertikalschnitt durch den Heckbereich des Wasserfahrzeuges gemäß der Ansicht nach Fig. 2 und
- Fig. 4: das Wasserfahrzeug gemäß Fig. 2 in Detailansicht von unten.

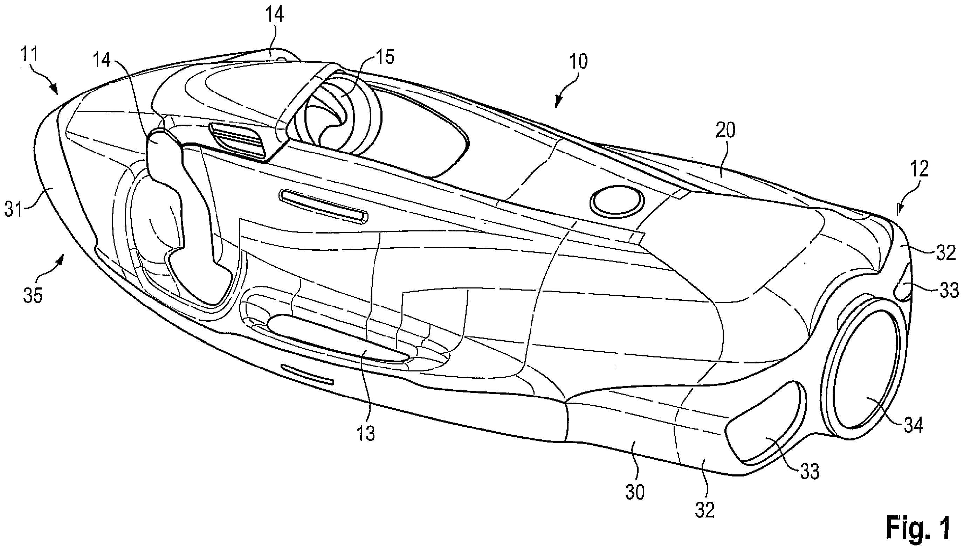

In Fig. 1 ist ein Wasserfahrzeug gezeigt, dass einen Rumpf 10 aufweist. Dabei ist der Rumpf 10 aus einem Oberteil 20 und einem Unterteil 30 zusammengesetzt. Das Oberteil ist mit zwei Steuergriffen 14 ausgerüstet die beidseitig des Rumpfes 10 angeordnet sind. An diesen Steuergriffen14 kann sich ein Benutzer festhalten und das Wasserfahrzeug mit an den Steuergriffen 14 angebrachten Bedienelementen steuern. Insbesondere kann hier die Motorleistung des Wasserfahrzeuges variiert werden. Der Benutzer, der sich an den Steuergriffen 14 festhält, liegt mit seinem Oberkörper im Bereich hinter einem Display 15 bereichsweise auf dem Oberteil 20 auf.

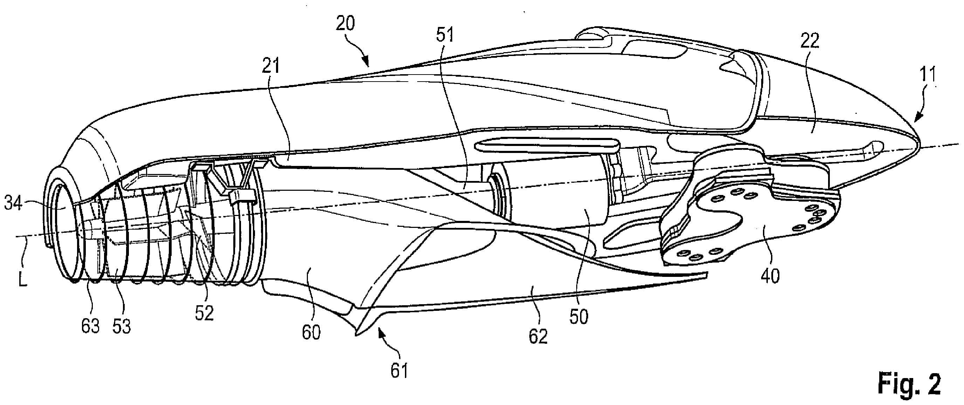

Wie Fig. 2 erkennen lässt, kann das Unterteil 30 vom Oberteil 20 demontiert werden. Es ist zu diesem Zwecke an das Oberteil 20 angeschraubt. Fig. 2 zeigt das Wasserfahrzeug bei abgenommenem Unterteil 30. Wie diese Darstellung erkennen lässt, ist mithin zwischen dem Oberteil 20 und dem Unterteil 30 ein Aufnahmeraum gebildet. Dieser Aufnahmeraum wird zur Oberseite mittels einer Bodenwand 22 des Oberteils 20 begrenzt. An dieser Bodenwand 22 können stabil Komponenten des Wasserfahrzeuges montiert werden.

Wie Fig. 2 erkennen lässt, ist im Bereich des Bugs 11 des Wasserfahrzeuges eine Steuerelektronik 40 montiert. In Richtung zum Heck 12 versetzt ist hinter der Steuerelektronik 40 ein als Elektromotor 50 ausgeführtes Antriebsaggregat geschützt in einem Gehäuse untergebracht. Die Abtriebswelle des Motors 50 ist durch ein Hüllrohr 51 hindurchgeführt und trägt an seinem freien Ende einen Propeller 52. Der Propeller 52 ist in einem Strömungskanal 60 angeordnet. Dabei wird der Strömungskanal 60 von einem Hohlkörper gebildet, der im Bereich der Unterseite des Wasserfahrzeuges eine Ansaugöffnung 61 bildet. Diese Ansaugöffnung 61 ist mit einem mittig in der Ansaugöffnung 61 angeordneten Leitelement 62 stabilisiert. Das Leitelement 62 hat zusätzlich zu seiner mechanischen Schutzfunktion die Aufgabe den Fahrbetrieb zu stabilisieren. Es wirkt dabei ähnlich wie das Schwert eines Segelbootes. Weiterhin schützt das Leitelement 62 auch den Strömungskanal 61 im, Bereich der Ansaugöffnung vor mechanischer Beanspruchung, wenn das Wasserfahrzeug auf Grund läuft oder an Land abgelegt wird. Im Bereich zwischen dem Oberteil 20 und dem Unterteil 30 ist, wie vorstehend erwähnt wurde, unterhalb der Bodenwand 22 ein Aufnahmeraum gebildet, in dem die elektrischen Komponenten, nämlich die Steuerelektronik 40, der Motor 50 und die Energiespeicher 70 (Akkumulatoren) untergebracht sind. Dieser Aufnahmeraum steht über Wasserdurchtrittsöffnungen mit der Umgebung in Verbindung. Dabei sind die Wasserdurchtrittsöffnungen im Unterteil 30 ausgebildet. Wie Fig. 1 erkennen lässt, sind die Wasserdurchtrittsöffnungen im Bereich des Bugs 11 als Wassereintrittsöffnungen 35 und im Bereich des Hecks 12 als Wasseraustrittsöffnungen 33 ausgeführt. Der Aufnahmeraum bildet mithin einen Flutungsraum. Dieser wird, sobald das Wasserfahrzeug in das Wasser gesetzt wird mit Wasser geflutet, das durch die Wasserdurchtrittsöffnungen eindringt. Sobald das Wasserfahrzeug in den Fahrbetrieb übergeht, wird im Flutungsraum eine Strömung erzeugt. Dementsprechend tritt Wasser durch die Wassereintrittsöffnungen 35 in den Flutungsraum ein. Das Wasser durchströmt den Flutungsraum und umspült dabei die im Flutungsraum gehaltenen elektrischen Baueinheiten. Dabei nimmt das Wasser die Verlustleistung der elektrischen Baueinheiten auf und kühlt diese. Nach Durchströmen des Flutungsraums verlässt das Wasser diesen durch die Wasseraustrittsöffnungen 33, die symmetrisch beidseitig des Strahlaustritts 34 angeordnet sind.

Fig. 2 lässt weiter erkennen, dass der Strömungskanat 60 im Bereich des Flutungsraums verläuft und zwei Teilbereiche im Flutungsraum gegeneinander bereichsweise abgrenzt. In jedem der Teilbereiche ist jeweils ein Energiespeicher (Akkumulator) angeordnet. Jeder der Teilbereiche weist auch eine der beiden Wasseraustrittsöffnungen 33 auf. Die elektrischen Baueinheiten sind mittels Aufhängungen an der Bodenwand 22 des Oberteils 20 angebracht. Dabei ist die Aufhängung so gewählt, dass die elektrischen Baueinheiten an den Bereichen, über die die Verlustwärme abgetauscht wird, beabstandet zu der Bodenwand 22 gehalten sind. Damit kann das Wasser im Flutungsraum die Baueinheiten hier effektiv umströmen. Es hat sich gezeigt, dass die Anordnung des Strömungskanals 60 im Flutungsraum eine Querschnittsverjüngung des Flutungsraums mit sich bringt. Dadurch wird eine Erhöhung der Strömungsgeschwindigkeit im verjüngten Bereich erzielt. Durch diese Geschwindigkeitsvariation lässt sich abhängig von der zu kühlenden elektrischen Komponente gezielt die Wasserströmung und damit die Kühlwirkung einstellen. Im vorliegenden Ausführungsbeispiel sind die Energiespeicher 70 im Bereich der verjüngten Querschnitte in den Teilbereichen angeordnet.

An seinem der Ansaugöffnung 61 in Strömungsrichtung abgewandten Ende bildet der Hohlkörper einen Flanschbereich an dem ein in Impellergehäuse 63 angeflanscht werden kann. Der Propeller 52 ragt in das Impellerghäuse 63. In Strömungsrichtung hinter dem Propeller 52 ist ein Strömungsstator 53 angeordnet. Während des Betriebs saugt der Propeller 52 Wasser durch die Ansaugöffnung 61 in den Strömungskanal 16, beschleunigt diese und stößt es durch das Impellergehäuse 63 im Bereich eines Strahlaustritts 34 aus. Der Stator 53 hat dabei die Aufgabe die rotierende Wasserbewegung geradezurichten, sodass zum Zwecke einer Wirkungsgradverbesserung die Strömung am Strahlaustritt möglichst drallfrei austritt.

Wie Fig. 1 erkennen lässt, besitzt das Oberteil 20 im Bereich der Bodenwand 22 Aufnahmen 21. Diese Aufnahmen 21 sind beidseitig des Strömungskanals 60 angeordnet.

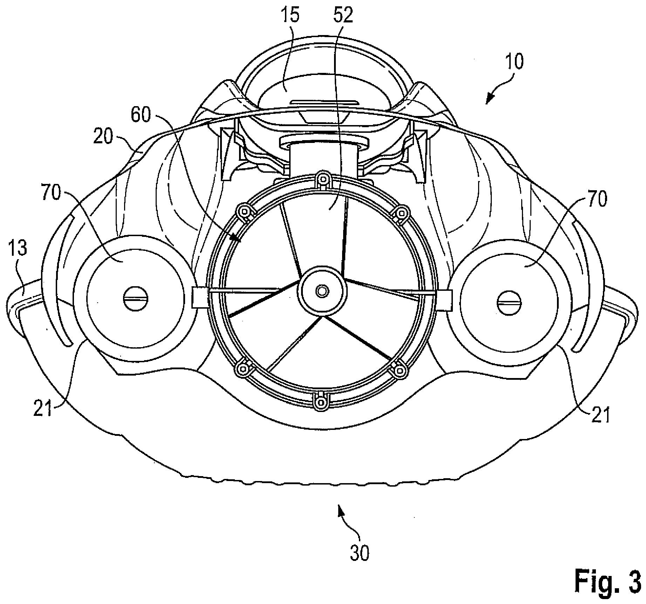

Fig. 3 lässt erkennen, dass die Aufnahmen 21 beidseitig der durch die Mittellängsachse L (siehe Fig. 2) verlaufenden Mittellängsebene des Wasserfahrzeuges angeordnet sind. Die Mittellängsebene verläuft in Fig. 3 vertikal. Die Zuordnung der beiden Aufnahmen 21 zu der Mittellängsebene ist so gewählt, dass sich eine symmetrische Bauweise ergibt. In den Aufnahmen 21 können Energiespeicher 70, die vorliegend als elektrische Akkumulatoren ausgebildet sind, angeordnet werden. Aufgrund der symmetrischen Anordnung der Aufnahmen 21 sind auch die Energiespeicher 70 symmetrisch zur Mittellängsebene angeordnet.

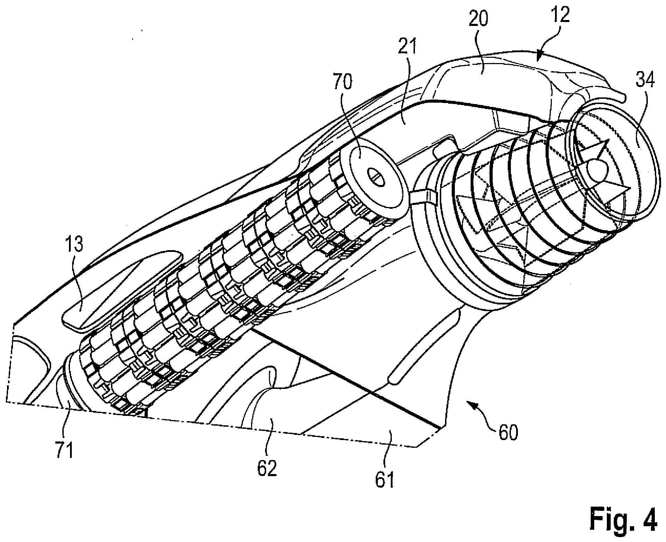

Fig. 4 gibt die Anordnung der Energiespeicher 70 in den Aufnahmen 21 zu erkennen. Wie Fig. 4 veranschaulicht, ist die Aufnahme 21 in Längsrichtung L des Wasserfahrzeuges länger dimensioniert als die Erstreckung des Energiespeichers 70 in dieser Richtung. Mithin bietet die Aufnahme 21 Platz für den alternativen Einbau eines anderen Energiespeichers 70, der eine entsprechend größere Bauweise aufweist und mithin eine höhere Leistung ermöglicht.

## Patentansprüche

1. Wasserfahrzeug mit einem Rumpf (10), der einen Strömungskanal (60) aufweist oder dem ein Strömungskanal (60) zugeordnet ist,
wobei dem Strömungskanal (60) eine motorbetriebene Wasser-Beschleunigungsanordnung, insbesondere ein Propeller zugeordnet ist, **dadurch gekennzeichnet, dass** zusätzlich der Rumpf (10) einen Flutungsraum aufweist, der über Wassereintritts- und Wasseraustrittsöffnungen (35,33) zur Erzeugung einer Strömung im Flutungsraum während des Fahrbetriebs mit der Umgebung in Verbindung steht und dass der Strömungskanal (60) im Bereich des Flutungsraums verläuft und zwei Teilbereiche im Flutungsraum gegeneinander bereichsweise abgrenzt.

2. Wasserfahrzeug nach Anspruch 1 oder 2,
**dadurch gekennzeichnet,**
**dass** in dem Flutungsraum wenigstens eine elektrische Baueinheit angeordnet ist.

3. Wasserfahrzeug nach Anspruch 1 oder 2,
**dadurch gekennzeichnet,**
**dass** die elektrische Baueinheit eine Steuerungselektronik (40) ein ElektroMotor (50) und/oder ein Energiespeicher (70) ist.

4. Wasserfahrzeug nach einem der Ansprüche 1 bis 3,
**dadurch gekennzeichnet,**
**dass** der Rumpf (10) ein Oberteil (20) und ein Unterteil (30) aufweist, zwischen denen der Flutungsraum gebildet ist, und dass das Ober- und/oder das Unterteil (20. 30) zumindest bereichsweise die Außenhülle des Rumpfs (10) bilden.

5. Wasserfahrzeug nach einem der Ansprüche 1 bis 4,
**dadurch gekennzeichnet,**
**dass** das Unterteil (30) lösbar mit dem Oberteil (20) verbunden ist.

6. Wasserfahrzeug nach einem der Ansprüche 1 bis 5,
**dadurch gekennzeichnet,**
**dass** der Rumpf (10) zumindest eine Eintrittsöffnung (35) im Bereich des Bugs (11) und zumindest eine Austrittsöffnung (33) im Bereich des Hecks (12) bildet.

7. Wasserfahrzeug nach einem der Ansprüche 1 bis 6,
**dadurch gekennzeichnet,**
**dass** der Strömungskanal (60) zumindest bereichsweise im Bereich des Flutungsraums angeordnet ist und den freien Querschnitt des Flutungsraums verjüngt,
und **dass** im Bereich des verjüngten Querschnitts eine elektrische Baueinheit (Energiespeicher (70)) angeordnet ist.

8. Wasserfahrzeug nach einem der Ansprüche 1 bis 7,
**dadurch gekennzeichnet,**
**dass** der Strömungskanal (60) zwei Teilbereiche im Flutungsraum gegeneinander zumindest bereichsweise abgrenzt,
und **dass** in jedem der Teilbereiche eine elektrische Baueinheit (Energiespeicher (70)) angeordnet ist.

9. Wasserfahrzeug nach einem der Ansprüche 1 bis 8,
**dadurch gekennzeichnet,**
**dass** in dem Flutungsraum zwei Teilbereiche baulich gegeneinander abgegrenzt sind,
wobei jedem Teilbereich eine Wassereintritts- und/oder Wasseraustrittsöffnung (35,33) zugeordnet ist.

10. Wasserfahrzeug nach einem der Ansprüche 1 bis 9,
**dadurch gekennzeichnet,**
**dass** die elektrische Baueinheit mittels einer Aufhängung befestigt ist,
und **dass** die Aufhängung die elektrische Baueinheit beabstandet zu dem den Flutungsraum begrenzenden Wandelement hält.

11. Wasserfahrzeug nach deinem der Ansprüche 1 bis 10,
**dadurch gekennzeichnet,**
**dass** es bei geflutetem Flutungsraum einen Auftrieb von mindestens 4 Kilogramm vorzugsweise 7 Kilogramm aufweist.

## Claims

1. A watercraft comprising a hull (10) which has a flow channel (60) or with which a flow channel (60) is associated.
wherein a motor-driven water-acceleration arrangement, in particular a propeller, is associated with the flow channel (60),
**characterised in that**
the hull (10) has a flooding chamber which is connected to the surroundings via water inlet openings and water outlet openings (35, 33) in order to generate a flow in the flooding chamber during drive operation, and that the flow channel (60) extends in the region of the flooding chamber and delimits two sub-regions with respect to one another in some regions in the flooding chamber.

2. The watercraft according to claim 1 or 2,
**characterised in that**
at least one electrical component is arranged in the flooding chamber.

3. The watercraft according to claim 1 or 2,
**characterised in that**
the electrical component is an electronic control system (40), an electric motor (50) and/or an energy accumulator (70).

4. The watercraft according to one of claims 1 to 3,
**characterised in that**
the hull (10) has a top part (20) and a bottom part (30), between which the flooding chamber is formed, and that the top part and/or the bottom part (20, 30) at least in some regions form the outer shell of the hull (10).

5. The watercraft according to one of claims 1 to 4,
**characterised in that**
the bottom part (30) can be detachably connected to the top part (20).

6. The watercraft according to one of claims 1 to 5,
**characterised in that**
the hull (10) forms at least one inlet opening (35) in the region of the bow (11) and at least one outlet opening (33) in the region of the stern (12).

7. The watercraft according to one of claims 1 to 6,
**characterised in that**
the flow channel (60) is arranged at least in some regions in the region of the flooding chamber and tapers the free cross-section of the flooding chamber, and that an electrical component (energy accumulator (70)) is arranged in the region of the tapered cross-section.

8. The watercraft according to one of claims 1 to 7,
**characterised in that**
the flow channel (60) delimits two sub-regions with respect to one another at least in some regions in the flooding chamber,
and that an electrical component (energy accumulator (70)) is arranged in each of the sub-regions.

9. The watercraft according to one of claims 1 to 8,
**characterised in that**
that two sub-regions are structurally delimited with respect to one another in the flooding chamber,
wherein a water inlet opening and/or water outlet opening (35, 33) is associated with each sub-region.

10. The watercraft according to one of claims 1 to 9,
**characterised in that**
the electrical component is fastened by means of suspension,
and that the suspension holds the electrical component in a spaced manner with respect to wall element delimiting the flooding chamber.

11. The watercraft according to one of claims 1 to 10,
**characterised in that**
same has a buoyancy of at least 4 kilogrammes, preferably 7 kilogrammes, when the flooding chamber is flooded.

## Revendications

1. Véhicule marin présentant une coque (10), qui présente un canal d'écoulement(60) ou à laquelle un canal d'écoulement (60) est associé,
dans lequel un dispositif d'accélération d'eau commandé par un moteur, en particulier une hélice, est associé au canal d'écoulement (60),
**caractérisé en ce**
**que** la coque (10) présente en outre un espace de mise en eau, en communication avec l'environnement par le biais d'ouvertures d'entrée d'eau et de sortie d'eau (35, 33) pour la production d'un écoulement dans l'espace de mise en eau pendant la conduite et en ce que le canal d'écoulement (60) s'étend dans la zone de l'espace de mise en eau et délimite deux zones partielles l'une contre l'autre par sections dans l'espace de mise en eau.

2. Véhicule marin selon la revendication 1 ou 2,
**caractérisé en ce**
**qu'**au moins un module électrique est disposé dans l'espace de mise en eau.

3. Véhicule marin selon la revendication 1 ou 2,
**caractérisé en ce**
**que** le module électrique est une électronique de commande (40), un moteur électrique (50) et/ou un accumulateur d'énergie (70).

4. Véhicule marin selon une des revendications 1 à 3,
**caractérisé en ce**
**que** la coque (10) présente une partie supérieure (20) et une partie inférieure (30), entre lesquelles l'espace de mise en eau est formé et en ce que la partie supérieure et/ou la partie inférieure (20, 30) forment par sections l'enveloppe externe de la coque (10).

5. Véhicule marin selon une des revendications 1 à 4,
**caractérisé en ce**
**que** la partie inférieure (30) est reliée de manière amovible avec la partie supérieure (20).

6. Véhicule marin selon une des revendications 1 à 5,
**caractérisé en ce**
**que** la coque (10) forme au moins une ouverture d'entrée (35) dans la zone de la proue (11) et au moins une ouverture de sortie (33) dans la zone de la poupe (12).

7. Véhicule marin selon une des revendications 1 à 6,
**caractérisé en ce**
**que** le canal d'écoulement (60) est disposé au moins par sections dans la zone de l'espace de mise en eau et rétrécit la section transversale libre de l'espace de mise en eau
et en ce qu'un module électrique (accumulateur d'énergie (70)) est disposé dans la zone de la section transversale rétrécie.

8. Véhicule marin selon une des revendications 1 à 7,
**caractérisé en ce**
**que** le canal d'écoulement (60) délimite deux zones partielles l'une contre l'autre au moins par sections dans l'espace de mise en eau et en ce qu'un module électrique (accumulateur d'énergie (70)) est disposé dans chacune des zones partielles.

9. Véhicule marin selon une des revendications 1 à 8,
**caractérisé en ce**
**que** deux zones partielles sont délimitées structurellement l'une contre l'autre dans l'espace de mise en eau,
une ouverture d'entrée d'eau et/ou une ouverture de sortie d'eau (35, 33) étant affectées à chaque zone partielle.

10. Véhicule marin selon une des revendications 1 à 9,
**caractérisé en ce**
**que** le module électrique est fixé au moyen d'une suspension et en ce que la suspension tient le module électrique à distance de l'élément de paroi délimitant l'espace de mise en eau.

11. Véhicule marin selon une des revendications 1 à 10,
**caractérisé en ce**
**qu'**il présente, lorsque l'espace de mise en eau est inondé, une flottabilité d'au moins 4 kilogrammes, de préférence 7 kilogrammes.
